Europäisches Patentamt

**European Patent Office**

**Office européen des brevets**

(11) Publication number: **0 079 465**
**A2**

(12) # EUROPEAN PATENT APPLICATION

(21) Application number: **82109511.4**

(22) Date of filing: **14.10.82**

(51) Int. Cl.³: **G 06 F 15/40**

(30) Priority: **13.11.81 US 321003**

(43) Date of publication of application:
**25.05.83 Bulletin 83/21**

(84) Designated Contracting States:
**BE CH DE FR GB IT LI NL SE**

(71) Applicant: **International Business Machines
Corporation**

**Armonk, N.Y. 10504(US)**

(72) Inventor: **Glickman, David
1568 Andover Lane
Frederick Maryland 21701(US)**

(72) Inventor: **Rosenbaum, Walter Steven
7420 Westlake Terrace Apt. 1609
Bethesda, Maryland 20034(US)**

(74) Representative: **Gallois, Gérard
COMPAGNIE IBM FRANCE Département de Propriété
Industrielle
F-06610 La Gaude(FR)**

(54) **Method for storing and accessing a relational data base.**

(57) An improved method for storing and accessing relational data bases in information processing systems. The data base records (44) are synthesized into a summary sorted list (45) of unique data elements. The data elements are related by virtue of their positions in the sorted list to pointers stored in an index table (43) which is an isomorphic mapping of the data base records from which the summary sorted list was derived. The index table captures the record content and juxtaposition of the record fields in a relational manner and yields the effect of a totally inverted data base file. The index table pointers facilitate high speed relational query processing with a minimum allocation of memory.

DATA BASE

| NAME | LOCATION | MANAGER | TITLE | SALARY |
|---|---|---|---|---|
| JONES, B L | NEW YORK | HARRISON | SALESMAN | 40,000.00 |
| SMITH, J C | WASHINGTON | HARRISON | SALESMAN | 38,000.00 |
| THOMAS, W E | WASHINGTON | HARRISON | ACCOUNTANT | 27,000.00 |
| HARRISON, L | WASHINGTON | | PRESIDENT | 53,000.00 |

INDEX TABLE

| NAME | LOC | MGR | TITLE | SALARY |
|---|---|---|---|---|
| 3 | 4 | 2 | 6 | 12 |
| 7 | 9 | 2 | 6 | 11 |
| 8 | 9 | 2 | 1 | 10 |
| 2 | 9 | | 5 | 13 |

SUMMARY LIST

1) ACCOUNTANT
2) HARRISON, L
3) JONES, B L
4) NEW YORK
5) PRESIDENT
6) SALESMAN
7) SMITH, J C
8) THOMAS, W E
9) WASHINGTON
10) 27,000 00
11) 38,000 00
12) 40,000 00
13) 53,000 00

FIG. 5

## METHOD FOR STORING AND ACCESSING
## A RELATIONAL DATA BASE

### DESCRIPTION

### Background of the Invention

#### Technical Field of the Invention

This invention relates to information storage and retrieval systems and more particularly to improved methods for storing and accessing large data bases using relational query processing.

#### Description of the Background Art

In conventional information processing systems lists of information may be processed as a "file", where the file is a collection of records containing the same type of information. Records are divided into fields to separate and identify units of information in the record so that system functions such as selecting, sorting and processing can be performed on the field data. A collection of files is commonly called a data base. The selection of records from the data base conditioned on particular attribute fields is referred to as data base retrieval.

The number of record entries that can be stored in a given size information processing system memory and the flexibility with which the records can be accessed govern the practicality of a data base retrieval system. These constraints become particularly important when the information processing system is miniprocessor driven and a large part of the storage is disk or diskette files.

Data base retrieval has normally been done in a sequential manner which only allows for retrieval of record entries after an explicit match on a given attribute field. Depending

**0079465**

on the specifications of the system, only a limited number of such attributes can be accessed and used as a retrieval argument.

A much more flexible approach to data base retrieval is that of relational data base access which allows retrieval of records implicitly through searching any of the attribute fields which constitute the record. An example of a sequential data base access is the query "List all the journals with the key word 'aeronautics'. A relational query, however, could expand the scope of the interrogation of the data base to a query of the nature, "List the journals with the key word 'aeronautics' due for renewal in the next two months that cost $30.00, or more, and are received by managers". In the relational query the retrieved set of records would simultaneously meet the above constraints, whereas sequential query would require specialized post output processing to refine the initial set of records down to the particular constraint set requested by the relational query.

The efficiency of the relational query approach is clear, yet it is not widely available in the background art because of the extremely large system memory requirements, high processing time, and complex indexing scheme required to perform retrieval of records based on any field in the record and to enable simultaneous consideration of multiple fields in performing the data base access. One procedure for obtaining such apparent results, while not building a relational data base file, is to perform a sequential access and then post output process the information in the initially retrieved records until it yields the subset that was indicated by the relational data base query. This is not done simultaneously during the access of the data base, but rather by reprocessing the initially retrieved records field by field until all attributes of the query are considered. This type of accessing also degrades system performance due to the multiple input/output operations following processing of each attribute field and through increased processing time required to make the multiple passes through the data.

## SUMMARY OF THE INVENTION

The present invention discloses an improved method for storing and accessing relational data bases which increases data base record storage efficiency and reduces processing time in an information processing system. The data base records are synthesized into a summary sorted list of unique data elements. The data elements are related by virtue of their positions in the sorted list to pointers stored in an index table which is an isomorphic mapping of the data base records from which the summary sorted list was derived. The index table captures the record content and juxtaposition of the record fields in a relational manner and yields the effect of a totally inverted data base file. The index table pointers facilitate high speed relational query processing with a minimum allocation of memory.

## BRIEF DESCRIPTION OF THE DRAWING

FIG. 1 is a block diagram of an interactive text processing system embodying the present invention;

FIG. 2 is a functional diagram of the microprocessor shown in FIG. 1;

FIG. 3 is a functional diagram illustrating the data flow path between portions of the memory and the microprocessor and the display refresh buffer;

FIG. 4 is a diagrammatic view of the display shown in FIG. 1;

FIG. 5 illustrates the storage of data in the Direct Access Storage device shown in FIG. 1;

FIG. 6 is a flow diagram of the method for encoding data base information for more compact storage; and

FIG. 7 is a flow diagram of the method for retrieving the stored data base information.

## DESCRIPTION OF THE PREFERRED EMBODIMENT

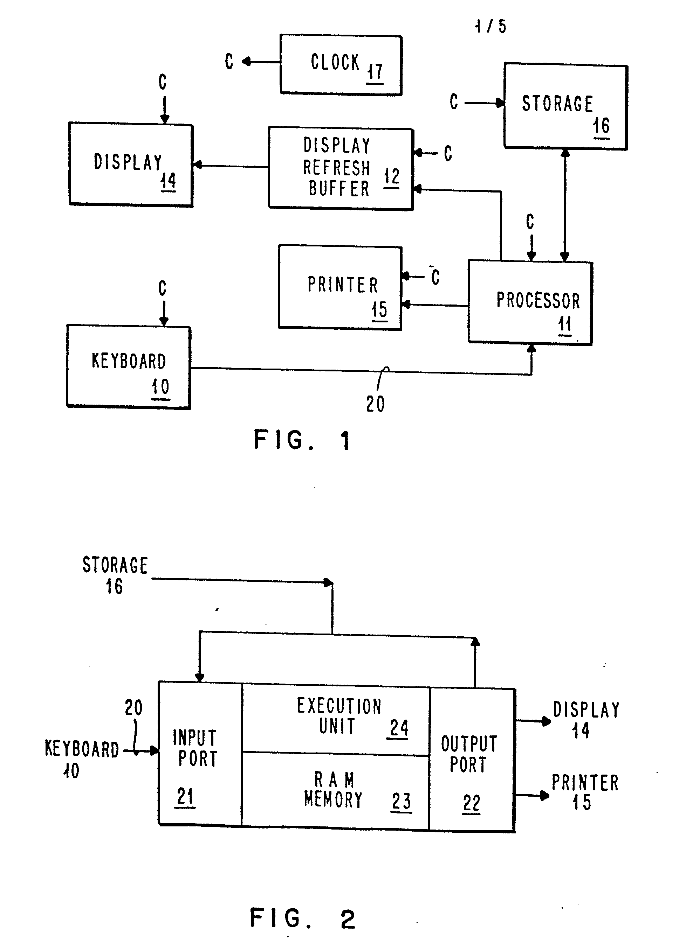

The invention will now be described as embodied in an interactive text processing system of the type shown in FIG. 1. As shown in FIG. 1, the text processing system illustrated therein comprises a keyboard 10, a microprocessor 11, a display refresh buffer 12, a display device 14, a printer 15, and an auxiliary direct access storage device 16 such as a disk drive. A clock 17, for keeping the various components of the system in synchronism, is also shown in FIG. 1 and is effectively coupled to each of the units.

Keyboard 10 comprises a normal set of graphic symbol keys such as letters, numbers, punctuation marks, and special character keys, plus text format or control keys like carriage return, tab, index, etc. In addition, the keyboard 10 includes a second set of control keys for issuing special control commands to the system. The control keys include cursor movement keys, keys for setting the keyboard 10 into a number of different modes, etc.

The keyboard 10 is connected to the microprocessor 11 by means of a bus 20. The microprocessor 11, as shown in FIG. 2, comprises an input port 21, an output port 22, a random access memory 23, and a process execution unit 24.

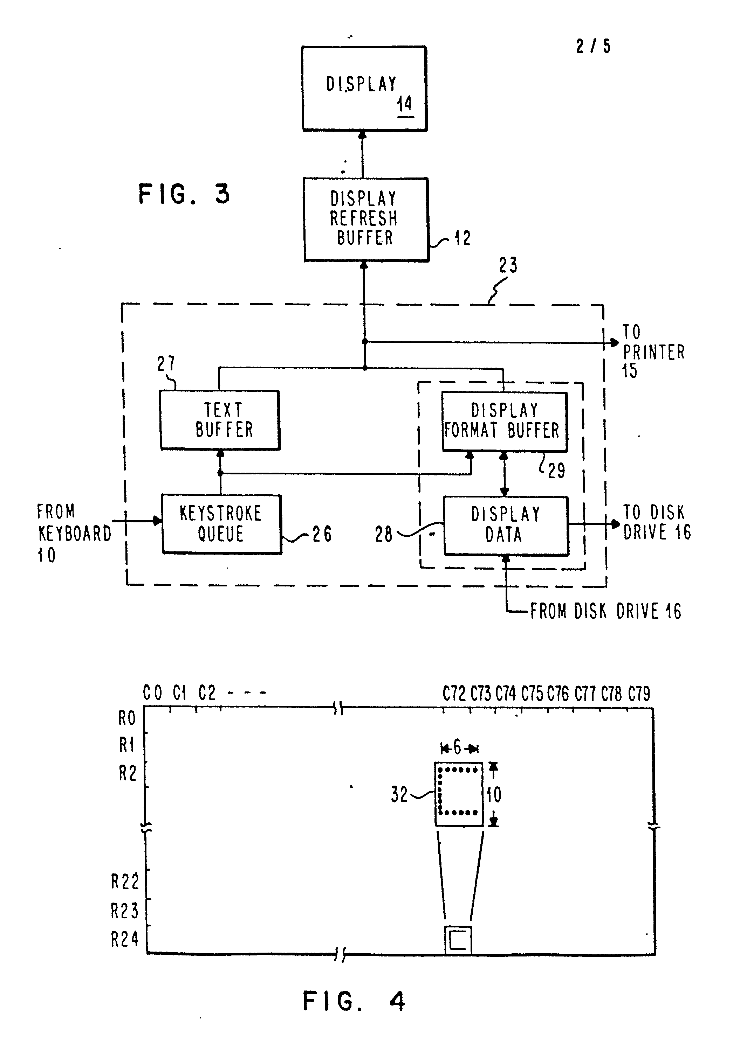

Functionally, memory unit 23 stores both instructions and data in specified sections which will be described in more detail later on in the specification. Data is entered into memory 23 from the keyboard 10 as bytes of binary information through input port 21. As shown in FIG. 3, the section of RAM 23 which received the keystroke data from the keyboard 10 is designated keystroke queue 26. Data to be displayed is transferred by a series of instructions from queue 26 to the text buffer section 27 and then to the display refresh buffer 12 through output port 22 of the microprocessor 11. This is achieved in a conventional way by the microprocessor 11 executing a series of move instructions.

The microprocessor 11 may be an IBM Series 1, INTEL model 8086, or any of the recognized functionally equivalent, currently available microprocessors.

The display refresh buffer 12 is shown as a separate buffer connected between the output port 22 and the display device 14. Buffer 12, in practice, is normally a part of the display device 14 and functions to control the generation of characters on the screen of the display device 14 by exercising on-off control of the beam as it traces a series of horizontal lines across the screen.

The output port 22 also supplies data stored in memory 23 to the printer 15 and disk storage unit 16, each of which may have their own internal buffers which are not shown. Commands to transfer data from the random access memory 23 to the printer 15 or storage unit 16 are sent to the microprocessor 11 by the operator from the keyboard 10.

Printer 15 may be any suitable printer known in the art. In most text processing systems, the printer 15 is basically a standard input/output terminal printer having a type ball element or a daisy-wheel print element.

Disk storage 16 may also be any suitable disk storage device which is capable of storing serial by byte data supplied to it at determined sector address locations, each of which are randomly addressable by the microprocessor 11 to retrieve the data. Spatially related data supplied from disk drive 16 is stored in the display data area 28 of the memory 23 in encoded form. The other section of memory 23 shown in FIG. 3 is the display format buffer area 29 which is involved in the handling of spatially related data in decoded form in accordance with the method of the present invention.

FIG. 4 is a schematic representation of the screen of display device 14. As shown in FIG. 4, the screen has, for example, the capability of displaying 25 lines of characters (R0-R24) where each line consists of 80 character column positions (C0-C79). In practice, one character position consists of a matrix of dot positions or picture elements sometimes referred to as pels. A typical character matrix for a display of the type represented by device 14 would be a matrix of six wide by ten high pels, which has been designated by reference character 32 in FIG. 4. The interaction of the refresh buffer 12 and the display 14 is to convert the characters stored at a location in the buffer 12 to the corresponding character as formed in a 6 x 10 dot matrix at the equivalent location on the display 14. Display 14 generally is provided with its own set of electronics to achieve that conversion. The microprocessor 11 need only supply the address and load the buffer 12 with the appropriate characters.

The disk storage device 16 also is generally provided with its own set of electronics for converting a byte of data supplied from the display data area 28 of memory 23 through the output port 22 to a serial by bit stream of data to be recorded at a predetermined sector of the one addressed concentric recording track on the disk. Data from the device 16 is supplied to the microprocessor 11 serial by byte from the addressed sector and storage tracks when requested.

It will be understood that all of the above described functions and interactions involving the microprocessor 11 are achieved through suitable programs which are also stored in memory 23 and which are called into operation in response to data from the keyboard 10 or interrupt signals generated by the various components of the system as shown in FIG. 1.

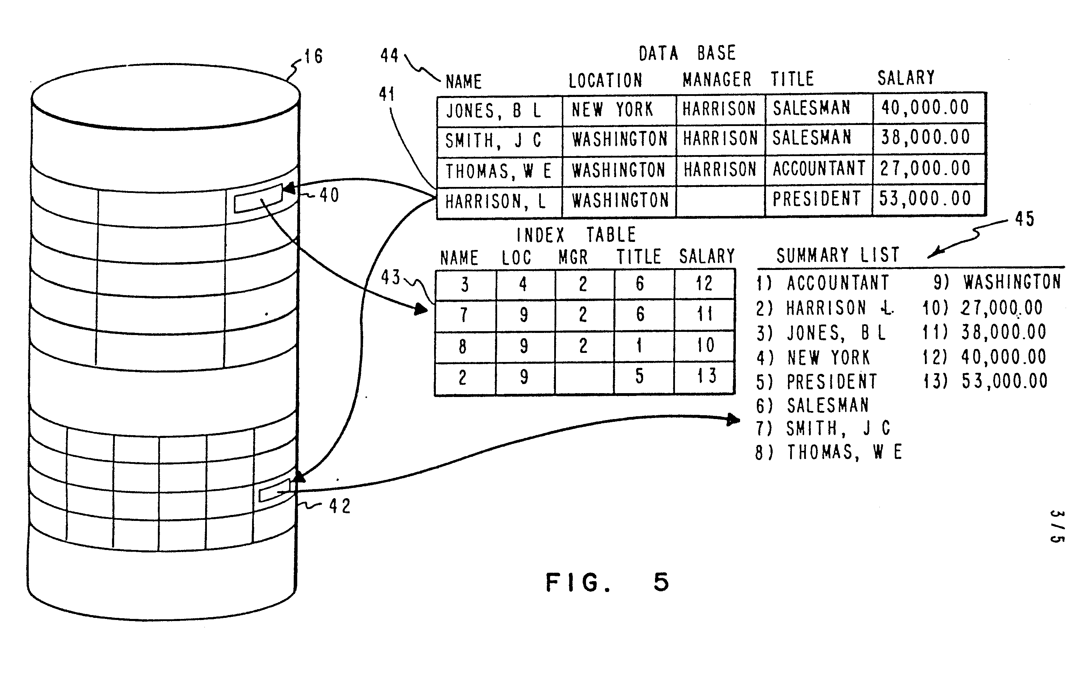

FIG. 5 illustrates a storage arrangement for storing data on a direct access storage device such as a disk 16 in accordance with the present invention. The data base 44 is shown in simplified form for ease of explanation as a personnel file consisting of records 41 having five fields of information about each employee. Each field has reserved a fixed number of bytes for storing the corresponding data. Although the number of bytes per field may vary between fields within a record, each record contains the same number of bytes for each corresponding field. For example, the name field may be 20 bytes while the location field is only 10 bytes. However the name field for all ·records will be 20 bytes and the location field for all records will be 10 bytes.

In practice, the data base 44 will consist of several files, for example, personnel files, inventory files, order files, etc. Each file may contain thousands of records and each record may contain up to 10 or more fields. Conventionally, such large data bases could only be processed on very large information processing systems having large capacity random access storage. Such large capacity random access storage was needed for performing operations such as sorting and searching the data base without time consuming input and output operations to disk storage devices.

The present invention compacts and encodes the data base information to eliminate the need for large amounts of random access storage without serious degradation to processing efficiency.

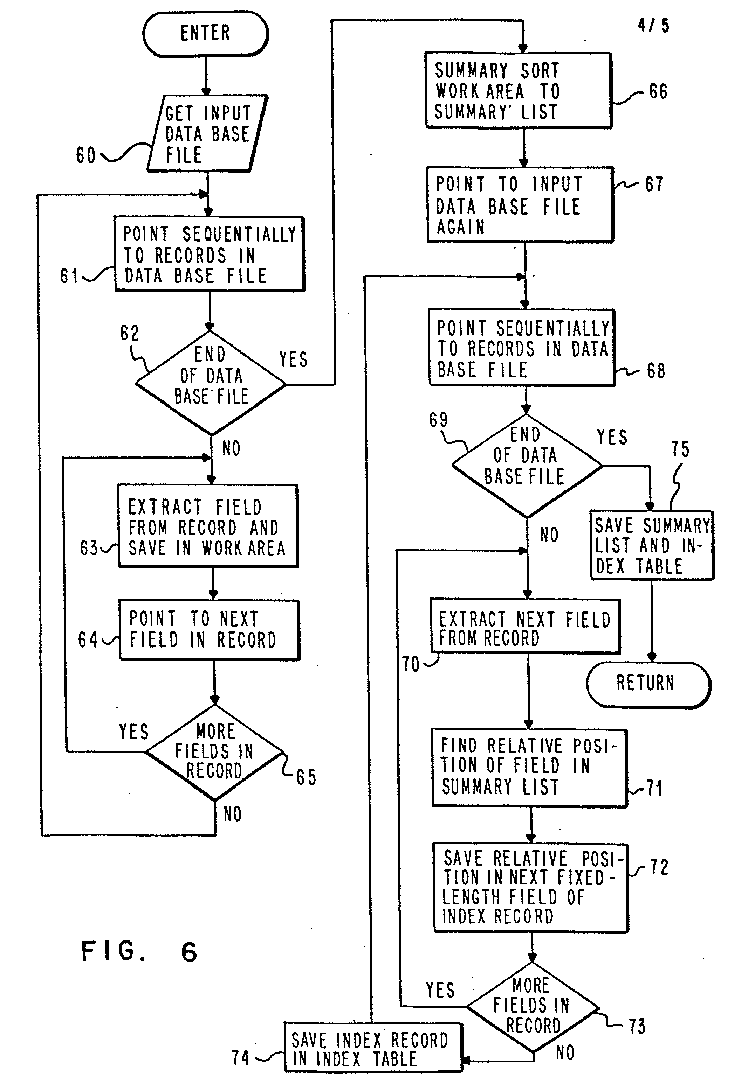

Referring to FIG. 6 in conjunction with FIG. 5, the process for compacting and encoding the data base information will now be described. In block 60 the data base information is brought into the system. The data base information may be stored on the disk file ·16 or it may be accessed from a larger information processing system over telecommunications lines. In block 61 each record 40 in the data base file is sequentially accessed. In block 62 a test is conducted to determine if the end of the data base file has been reached. If not then in block 63 each field from the record is extracted and saved in a work area in the system memory 23.

In block 64 the next field in the record is addressed and in block 65 a test is conducted to determine if the record contains more fields. If there are more fields in the record then a branch is taken back to block 63 wherein the extraction of fields from the record and storing of the fields in the work area continues until there are no more fields in a record. When the last field in the record has been extracted the routine branches back to block 61 to continue the sequential processing of the records with the next record. When the last record in the data base is reached at block 62 a branch is taken to block 66 wherein the record fields that have been saved in the work area are summary sorted into a summary list 45. The "summary sort" operation sorts the fields into alphabetic and numeric order and eliminates duplicates. Referring to FIG. 5, it can be seen that the original data base 44 contained four records of five fields each making a total of 20 fields. However the summary list 45 contains only 13 fields after summary sorting. This represents a very significant reduction in the size of the data base and the amount of storage required to store the data base. Of course it is readily apparent that the amount of storage reduction is dependent upon duplicate field information contained in the records.

Referring back to FIG. 6, following compilation of the summary list 45 in block 66 the process again accesses the input data base in block 67 and sequentially accesses the records in the data base in block 68. In block 69 an end of file condition is tested to determine if the end of the data base has been reached. When the condition indicates that the end of the data base has not·been reached, processing continues in block 70 where the next field is accessed from the record in the data base. In block 71 each field is compared to the contents of the summary list and the position of the field in the summary list is determined. For example, referring to FIG. 5, the name "B. L. Jones" in the first field of the first record appears as the third item in the summary list. In block 72 the position indicator 3 is saved as the numerical index code in the first field of the first index record in index table 43. Each index record represents an isomorphic mapping of the corresponding record in the data base. However the fields of the index records contain the position of the data base record field in the summary list rather than the data base record field data. In this way, 64,000 entries in the summary list can each be represented by a two-byte field in the index table. This represents an extremely high reduction in the amount of storage required to store the data base information. For example, if we assume that each record is 80 bytes long and contains 10 fields of information, then each record can be represented by 20 bytes of storage in the index table as compared to the 80 bytes of storage required for each record in the data base. Consequently, four times as many records can be represented using the index table encoding as could be stored if the data base records themselves were stored or only one-fourth as much storage is required for the index table as is required for the data base.

In some cases where numerical fields are involved, it may be necessary to store the numerical data intact in the index table. This condition would exist when a query requires an examination of the field for values "greater than" or "less than" a query keyword. However, this condition can be satisfied by predetermined position assignments for the numerical values and executing the "greater than" or "less than" comparison on the position value.

Still referring to FIG. 6, in block 73 a condition is tested to determine if more fields exist in the record that have not been processed. If more fields do exist then the process returns to block 70 to continue extracting fields from the records. When the end of the record is reached processing branches to block 74 wherein the index record is stored in the index table as shown in FIG. 5. A branch is then taken back to block 68 where processing continues with the next record. When the last record of the data base file has been processed and the condition is met in block 69, a branch is taken to block 75 wherein the summary list and the index table are saved by outputting them to disk storage device 16 in positions 40 and 42. The process then ends. Table 1 shows a pseudo code routine for implementing the process of FIG. 6. A detailed description of the use and operation of pseudo code may be found in "An Introduction To Programming", (A Structural Approach Using PL/1 and PL/C-7), Second Edition, by Richard Conway and David Gries, Winthrop Publishers, Cambridge, Massachusetts, Copyright 1975.

```
ENTER
POINT TO INPUT DATA BASE, A SEQUENTIAL FILE WHERE EACH
     RECORD HAS VARIOUS FIELDS ASSOCIATED WITH IT
DO UNTIL END-OF-FILE
     GET NEXT RECORD
     DO FOR NUMBER OF FIELDS PER RECORD
       EXTRACT THE FIELD AND PLACE IN WORK AREA
       POINT TO NEXT FIELD
     ENDDO
ENDDO
SUMMARY SORT WORK AREA TO SUMMARY LIST WHERE ONLY
     UNIQUE SORTED FIELDS REMAIN
POINT TO INPUT DATA BASE AGAIN
DO UNTIL END-OF-FILE
     GET NEXT RECORD
     DO FOR NUMBER OF FIELDS PER RECORD
       EXTRACT THE FIELD
       SEARCH THE SUMMARY LIST TO DETERMINE THE Nth
         POSITION NUMBER THAT THE FIELD IS IN THE
         SUMMARY LIST
       SAVE THE POSITION NUMBER, N, FOR THIS FIELD IN
         A FIXED LENGTH FIELD THAT CORRESPONDS
         ONE-FOR-ONE WITH THE INPUT DATA BASE FIELD
       POINT TO NEXT FIELD
     ENDDO
```

```
      SAVE RECORD OF POSITION NUMBERS N1, N2, Nn;
          CORRESPONDING TO INPUT RECORD IN INDEX TABLE
ENDDO
LEAVE
          AT THIS TIME, THE INDEX TABLE SHOULD CONTAIN THE
          SAME NUMBER OF RECORDS AND FIELDS PER RECORD AS
          THE INPUT DATA BASE.  FURTHERMORE, THE VALUES
          N, IN EACH FIELD SHOULD BE THE RELATIVE
          NUMBERS, N, IN THE SUMMARY LIST OF THE FIELDS
          CORRESPONDING TO THE INPUT DATA BASE FIELDS.


          TABLE 1  DATA BASE ENCODE
```

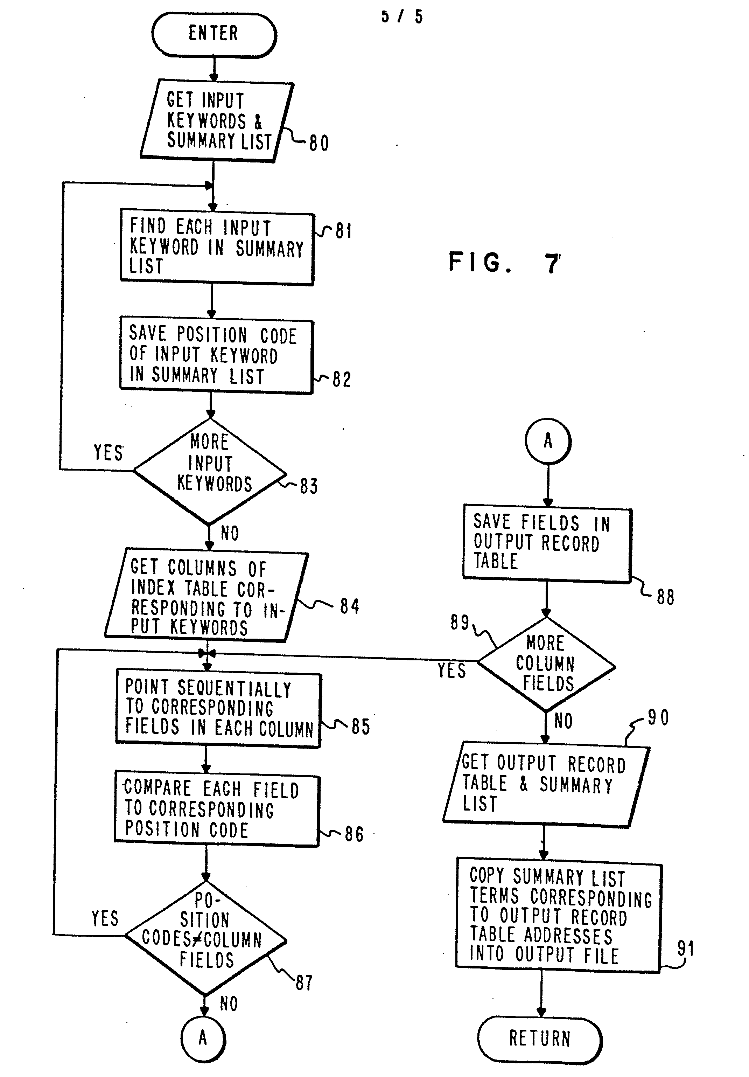

Referring now to FIG. 7 in conjunction with FIG. 5 the process will be described for accessing information from the reformatted and compacted data base.  For data base retrieval operations the information processing system operator will enter a query to the system through the keyboard 10.  The query will contain key words that relate to the fields of information in the data base records.  Retrieval processes of this type are well known in the prior art and an example is described herein in the Description of the Prior Art section of this application.  The key words in the query may be set out in quotes or otherwise identified to the data base retrieval system.  The input key words and the summary list table are brought into the process in block 80.  In block 81 the key words are compared against the summary list and when found the position code of the key word in the summary list is saved in block 82.  At·block 83 a condition is tested to determine whether there are more key words to be processed.  If so the processing returns to block 81 and continues to check the key words against the summary list.  When the last key word has been located in the summary list, the columns of the index table corresponding to the key words are brought into the process in block 84.  Referring to FIG. 5 and the index table 43 it can be seen that the index table is a matrix grid comprised of rows represented by each record and columns represented by each field. More efficient processing of this matrix can be made by bringing into the random access memory only those fields that are needed to respond to the query. This provides a further enhancement to the number of records that can be processed in the system by statistically determining the average number of fields that will be required for any given input query. In block 85 each field in each column is accessed and compared to the corresponding key word position code in block 86. If no match occurs in block 87 processing returns to block 85 and continues down each column. When the terms of the query are met then the field position codes are saved in an output record table at block 88 and the condition in block 89 is examined to determine if there are more column fields to be checked. If so processing returns to block 85 and continues comparing the column field position codes with the input key word position codes. Then following examination of the last column field the output record table and the summary list are retained in memory in block 90. The output record table contains all the address pointers to the terms in the summary list for reconstructing the records for printing or viewing on a display device. In block 91 the summary list is accessed at the addresses specified by the output record table and the corresponding terms from the summary list are used to construct the data records for the output file. Processing then returns to operator control where the output file is available for display, storage, or printing and the routine ends. Table 2 shows a pseudo code routine for executing the retrieval process of FIG. 7.

0079465

```
ENTER
POINT TO INPUT QUERY KEYWORDS AND STORED SUMMARY LIST
DO FOR EACH INPUT KEYWORD
      RESOLVE KEYWORD RELATIONSHIPS TO ORDER SEARCH
         FROM SMALLEST FILE TO LARGEST FILE
      LOOK UP EACH KEYWORD IN SUMMARY LIST TO GENERATE
         POSITION CODE
ENDDO
POINT TO INDEX TABLE
DO FOR EACH INPUT KEYWORD
      READ INTO STORAGE THE COLUMNS OF THE INDEX TABLE
         CORRESPONDING TO THE INPUT KEYWORDS
ENDDO
POINT TO THE BEGINNING OF EACH COLUMN
DO UNTIL ALL QUERY SOLUTIONS FOUND
      SYNCHRONOUSLY SEARCH SEQUENTIALLY EACH RECORD
         COLUMN FIELD TO SATISFY QUERY ARGUMENTS
      IF QUERY ARGUMENTS SATISFIED
         THEN SAVE ALL COLUMN FIELDS IN OUTPUT RECORD
            TABLE
         ELSE BUMP POINTERS TO NEXT RECORD COLUMN
            FIELD AND RESTART DO LOOP
      ENDIF
ENDDO
POINT TO OUTPUT RECORD TABLE AND SUMMARY LIST
IF ANY RECORDS SATISFIED THE QUERY
      THEN COPY SUMMARY LIST TERMS CORRESPONDING TO
         OUTPUT RECORD TABLE ADDRESSES INTO OUTPUT FILE
      ELSE SET INDICATOR FOR NO RECORDS FOUND
ENDIF
LEAVE
```

                TABLE 2 DATA BASE RETRIEVAL

While the invention has been particularly shown and described with reference to a preferred embodiment thereof, it will be understood by those skilled in the art that various changes by equivalent means may be made therein such as using different input/output devices or storages and equivalent processing steps without departing from the scope of the invention as defined by the claims.

15    **0079465**

CLAIMS

1.    A method for encoding and compactly storing an information data base characterized in that it comprises the
steps of :

a) accessing records from said information data base;

b) accessing information fields from said records;

c) arranging said information fields into a list of
unique items;

d) associating a position code with each unique item;

e) forming an index table of records by replacing each
field in each record in said information data base with
its unique item list position code; and

f) storing said index table of records and said list of
unique items.

2.    Method according to Claim 1 characterized in that the
step of arranging said information fields includes
sorting said information fields into alphabetical and
numerical order and deleting duplicates.

3.    Method according to Claim 1 or 2 characterized in that
said step of associating a position code includes associating a sequence number with each unique item.

4.    A method for relational accessing of information stored
in a data base characterized in that it comprises the
steps of:

a) receiving an input query of related items;

b) determining the relative positions of said related items in a prestored list of unique items;

c) comparing said relative positions to a prestored index table of records of relative positions;

d) saving the records from said index table of records that compare equal; and

e) replacing the fields in the saved index table of records with the corresponding unique items from the prestored list of unique items.

5. Method of relational accessing according to Claim 4 characterized in that the prestored list of unique items are alphabetic and numeric data fields.

6. Method of relational accessing according to Claim 4 or 5 characterized in that the relative positions are sequence numbers.

FIG. 1

FIG. 2

**FIG. 3**

**FIG. 4**

## DATA BASE

| NAME | LOCATION | MANAGER | TITLE | SALARY |
|------|----------|---------|-------|--------|
| JONES, B L | NEW YORK | HARRISON | SALESMAN | 40,000.00 |
| SMITH, J C | WASHINGTON | HARRISON | SALESMAN | 38,000.00 |
| THOMAS, W E | WASHINGTON | HARRISON | ACCOUNTANT | 27,000.00 |
| HARRISON, L | WASHINGTON | | PRESIDENT | 53,000.00 |

## INDEX TABLE

| NAME | LOC | MGR | TITLE | SALARY |
|------|-----|-----|-------|--------|
| 3 | 4 | 2 | 6 | 12 |
| 7 | 9 | 2 | 6 | 11 |
| 8 | 9 | 2 | 1 | 10 |
| 2 | 9 | | 5 | 13 |

## SUMMARY LIST

1) ACCOUNTANT    9) WASHINGTON
2) HARRISON L    10) 27,000.00
3) JONES, B L    11) 38,000.00
4) NEW YORK      12) 40,000.00
5) PRESIDENT     13) 53,000.00
6) SALESMAN
7) SMITH, J C
8) THOMAS, W E

FIG. 5

0079465

FIG. 6

## FIG. 7

```
        ENTER
          │
          ▼
┌──────────────────┐
│  GET INPUT       │
│  KEYWORDS &      │──80
│  SUMMARY LIST    │
└──────────────────┘
          │
          ▼
┌──────────────────┐
│ FIND EACH INPUT  │──81
│ KEYWORD IN       │
│ SUMMARY LIST     │
└──────────────────┘
          │
          ▼
┌──────────────────┐
│ SAVE POSITION    │
│ CODE OF INPUT    │
│ KEYWORD IN       │──82
│ SUMMARY LIST     │
└──────────────────┘
          │
          ▼
      ╱────────╲
YES  ╱  MORE    ╲
◄────╱  INPUT     ╲──83
     ╲  KEYWORDS  ╱
      ╲────────╱
          │ NO
          ▼
┌──────────────────┐
│ GET COLUMNS OF   │
│ INDEX TABLE COR- │
│ RESPONDING TO IN-│──84
│ PUT KEYWORDS     │
└──────────────────┘
          │
          ▼
┌──────────────────┐
│ POINT SEQUENTIALLY│
│ TO CORRESPONDING │
│ FIELDS IN EACH COLUMN│──85
└──────────────────┘
          │
          ▼
┌──────────────────┐
│ COMPARE EACH FIELD│
│ TO CORRESPONDING │
│ POSITION CODE    │──86
└──────────────────┘
          │
          ▼
      ╱────────╲
YES  ╱   PO-    ╲
◄────╱  SITION    ╲
     ╲ CODES≠COLUMN╱──87
      ╲ FIELDS   ╱
       ╲──────╱
          │ NO
          ▼
         (A)
```

```
         (A)
          │
          ▼
┌──────────────────┐
│ SAVE FIELDS IN   │
│ OUTPUT RECORD    │
│ TABLE            │──88
└──────────────────┘
          │
          ▼
      ╱────────╲
 89  ╱  MORE    ╲
────╱  COLUMN     ╲
YES ╲  FIELDS    ╱
     ╲────────╱
          │ NO
          ▼
┌──────────────────┐
│ GET OUTPUT RECORD│──90
│ TABLE & SUMMARY  │
│ LIST             │
└──────────────────┘
          │
          ▼
┌──────────────────┐
│ COPY SUMMARY LIST│
│ TERMS CORRESPONDING│
│ TO OUTPUT RECORD │
│ TABLE ADDRESSES  │──91
│ INTO OUTPUT FILE │
└──────────────────┘
          │
          ▼
       RETURN
```